# EUROPEAN PATENT SPECIFICATION

(11) **EP 3 409 892 B1**
(45) Date of publication and mention of the grant of the patent: **15.07.2020**
(21) Application number: 17173838.8
(22) Date of filing: 31.05.2017
(51) Int. Cl.: F01D 5/22, F01D 5/14, F01D 5/16

(54) **GAS TURBINE BLADE COMPRISING WINGLETS TO COMPENSATE CENTRIFUGAL FORCES**
GASTURBINENSCHAUFEL, WELCHE WINGLETS ZUR KOMPENSATION VON FLIEHKRÄFTEN BEINHALTET
PALE DE TURBINE À GAZ COMPRENANT DES AILETTES POUR COMPENSER DES FORCES CENTRIFUGALES

(43) Date of publication of application: 05.12.2018
(73) Proprietor: Ansaldo Energia Switzerland AG, 5401 Baden (CH)
(72) Inventor: GERSBACH, Frank, 5420 EHRENDINGEN (CH); BERETTA-MUELLER, Arrigo, 5420 EHRENDINGEN (CH); REITER, Jonas, 8400 WINTERTHUR (CH); NAIK, Shailendra, 5412 GEBENSTORF (CH)
(74) Representative: Andreotti, Erika

(56) References cited:
- EP-A1- 2 743 453
- EP-A1- 3 029 269
- US-A- 2 912 157
- US-A1- 2015 176 413

## Description

### TECHNICAL FIELD

The present invention relates to a blade for a gas turbine and to a gas turbine comprising said blade. In particular, the gas turbine according to the present invention is part of an electric power production plant connected to an electrical grid.

### BACKGROUND

As is known, electric power production plants comprise at least one gas turbine supplied with an hot gas working fluid coming from at least one combustion chamber. Generally, the gas turbine comprises at least one row of circumferentially spaced rotor blades extending radially outwardly from a respective rotor disc rotating about an axis of the gas turbine.

The power produced by the plant increases as the size of the gas turbine and, more specifically, the amount of hot working fluid passing into it increases.

However, the size of the channel of the gas turbine is limited by the operable length of gas turbine rotor blades arranged inside the channel.

Long rotor blades, in fact, incur high mechanical loads. Moreover, in rotor blades, the greater the length the lower the natural frequency. This may cause an increase in the vibratory response of long rotor blades during the operation of the gas turbine.

In order to optimize the vibrational and aero-elastic behaviour of long turbine blades, snubbers are normally applied on the airfoil of the rotor blades. Examples of snubbers are disclosed in document US 5695323 and EP3029269.

However, the adoption of the kind of snubbers already known causes an increase of the load on the rotating discs of the gas turbine and on the blade attachment to the rotor disc (both on blade side and disc side).

As a consequence, the blade length is limited by load capability of the disc and of the blade attachment.

### SUMMARY

The object of the present invention is therefore to provide a blade that enables avoiding or at least mitigating the described drawbacks. In particular, it is an object of the present invention to provide a blade designed so as to reduce the loads on the rotor disc and on the blade attachment. In this way longer blades can be adopted for increasing the power generated by the gas turbine. According to the present invention, there is provided a rotating blade for a gas turbine as claimed in claim 1.

In this way the load on the root and on the attachment of the blade is reduced.

According to a preferred embodiment of the present invention, the snubber projects from the suction side and/or the pressure side substantially along a circumferential direction.

According to the present invention, the snubber has an upstream edge and a downstream edge, an upper face facing the tip and extending from the upstream edge to the downstream edge and a lower face facing the root and extending from the upstream edge to the downstream edge; the snubber being shaped so as, in use, the pressure of the hot working fluid flowing in the gas turbine increases during the passage on the upper face and decreases during the passage along the lower face in order to create a downward force on the blade towards the root.

According to a preferred embodiment of the present invention, the upper surface is concave.

According to a preferred embodiment of the present invention, the lower surface is convex.

According to a preferred embodiment of the present invention, the distance between the leading edge of the airfoil and the upstream edge of the snubber is smaller than the distance between the downstream edge of the snubber and the trailing edge of the airfoil.

In this way the upstream edge is located in a region wherein the hot gas working fluid flow has a moderate Mach number. This is beneficial for aerodynamic loss reduction. According to a preferred embodiment of the present invention, the snubber has a radial section which tapers towards the downstream edge.

According to a preferred embodiment of the present invention, the axial length of the snubber has a value comprised between 10% and 60% of the axial length of the airfoil measured at the radial height at which the snubber is positioned.

According to a preferred embodiment of the present invention, the snubber projects from the airfoil in a region of the airfoil extending from 50% to 80% of the span of the airfoil.

According to a preferred embodiment of the present invention, the blade comprises at least one further snubber projecting from the suction side and/or the pressure side shaped so as to create a further centripetal force towards the root.

According to a preferred embodiment of the present invention, the blade comprises a first snubber projecting from the suction side and a second snubber projecting from the pressure side; the first snubber and the second snubber being provided with a respective first end face and second end face; the first end face and the second end face being complementary.

It is furthermore another object of the present invention to provide a gas turbine having an improved power and/or efficiency.

According to said object the present invention relates to a gas turbine comprising at least a row of rotating blades; at least one of the rotating blades of the row being of the type claimed in anyone of the claims 1-12.

### BRIEF DESCRIPTION OF THE DRAWINGS

The present invention will now be described with reference to the accompanying drawings, which illustrate some non-limitative embodiment, in which:
- Figure 1 is a schematic lateral representation, with parts removed for clarity and parts in section, of an electric power production plant comprising a gas turbine according to the present invention;
- Figure 2 is a schematic perspective view, with parts removed for clarity, of a blade for a gas turbine according to the present invention;
- Figure 3 is a schematic lateral view, with parts removed for clarity, of the blade of figure 2;
- Figure 4 is a section view of a detail of the blade of figure 2 along the plane IV-IV;
- Figure 5 is a schematic perspective view of two blades according to the present invention arranged side by side as in use configuration.

### DETAILED DESCRIPTION OF EXEMPLARY EMBODIMENTS

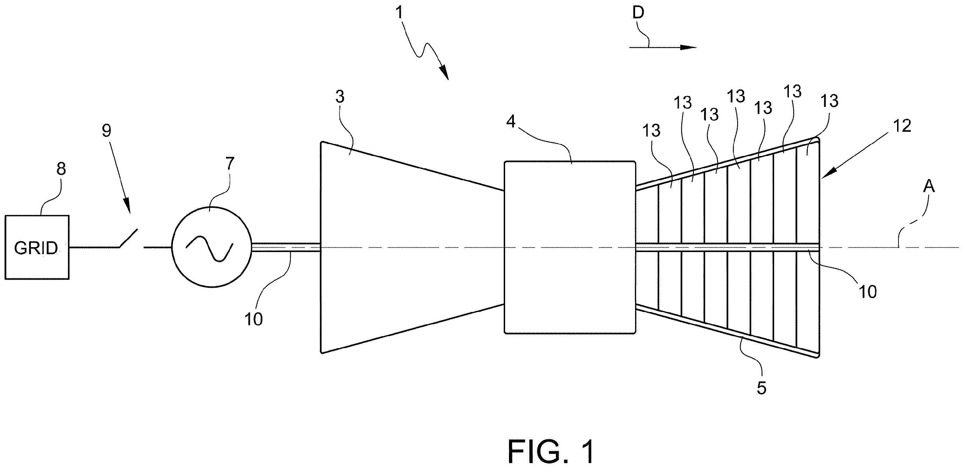

In figure 1, reference numeral 1 indicates a gas turbine plant for electrical energy production comprising a compressor 3, a combustor 4, a turbine 5 and a generator 7, which transforms the mechanical power supplied by turbine 5 into electrical power to be supplied to an electrical grid 8, connected to the generator 7 via a switch 9.

A variant not shown provides for plant 1 to be of the combined cycle type and including, in addition to the gas turbine 5 and generator 7, also a steam turbine.

The gas turbine 5 extends along a longitudinal axis A and is provided with a shaft 10 (also extending along axis A) to which compressor 3 and generator 7 are also connected. Gas turbine 5 comprises an expansion channel 12 wherein the hot gas working fluid coming from the combustor 4 flows in a direction D.

The expansion channel 12 has a section which radially increases along the axis A in the direction D.

In the expansion channel 12 a plurality of stages 13 spaced along the longitudinal axis A is arranged. Each stage 13 comprises a row of fixed blades and a row of rotating blades (not illustrated in figure 1). Each row comprises circumferentially spaced blades extending radially outwardly.

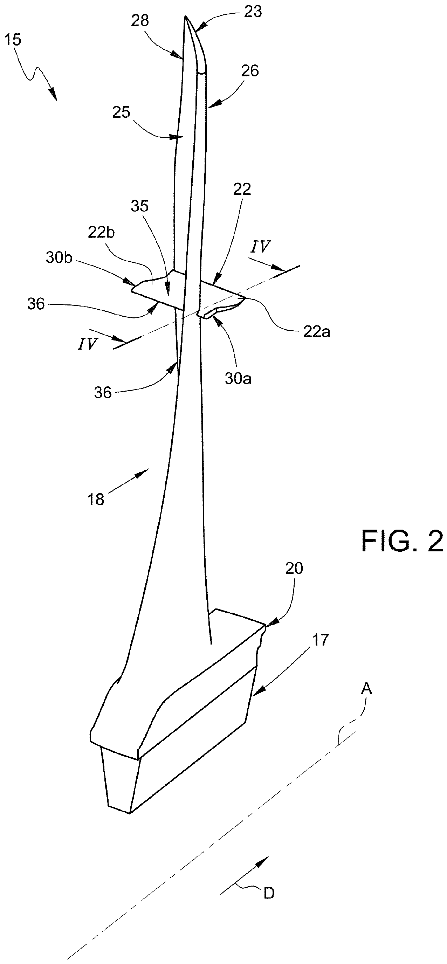

In figure 2 a rotating blade 15 of a stage 13 of the gas turbine 5 is represented.

The blade 15 comprises a root 17, an airfoil 18, a platform 20 and at least one snubber 22.

The root 17 is configured to be coupled to a disc (not illustrated in the accompanying figures) of the gas turbine 5 which rotates about axis A. In particular, the disc has a plurality of axial seats, which are circumferentially spaced and engaged by respective roots 17 of the rotating blades 15.

The airfoil 18 extends from the platform 20 and is provided with a tip 23 which, in use, is radially opposite to the root 17.

The airfoil 18 is completely housed in the expansion channel 12 and defines the aerodynamic profile of the rotating blade 15.

The airfoil 18 has a concave pressure side 25 and a convex suction side 26, which, in use, extend axially between a leading edge 27 and a trailing edge 28 and radially between the root 17 and the tip 23.

The leading edge 27 being upstream of the trailing edge 28 along the direction D of the hot working fluid in the expansion channel 12.

The platform 20 is arranged between the root 17 and the airfoil 18.

The snubber 22 projects from the suction side 26 and/or the pressure side 25, preferably along a circumferential direction.

In the non-limiting example here described and illustrated, the rotating blade 15 comprises two snubbers 22: a snubber 22a extending outboard from the suction side 26 and a snubber 22b extending inboard from the pressure side 25. Preferably, the snubbers 22a 22b project substantially along a same circumferential direction.

The snubber 22a and the snubber 22b are substantially identical except for the fact that the end face 30a of snubber 22a has a shape complementary to the end face 30b of the snubber 22b.

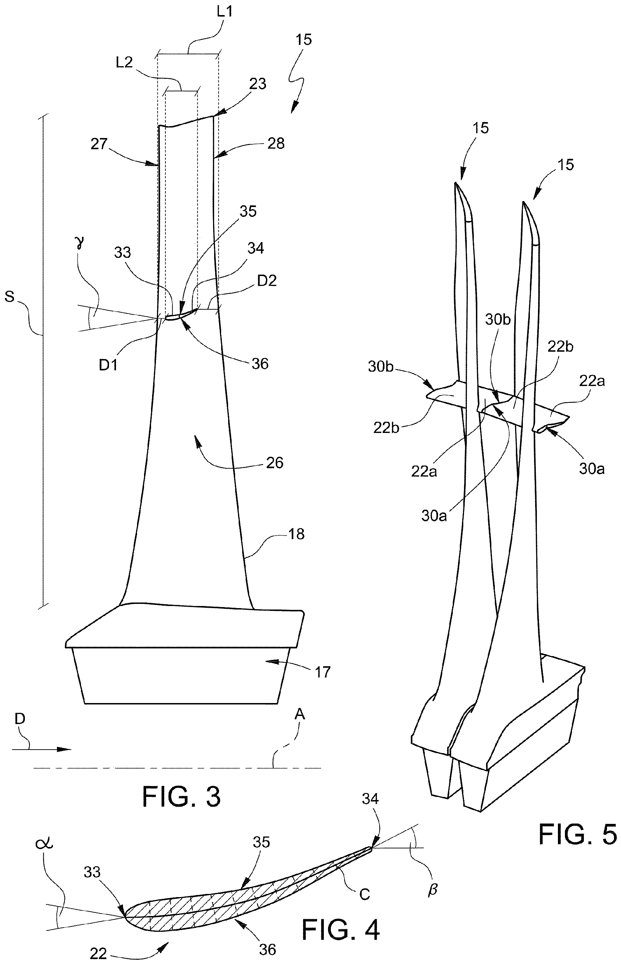

In this way, when the rotating blades 15 are coupled to the rotor disc and arranged side by side as illustrated in figure 5, the end face 30a of a rotating blade 15 substantially engages the end face 30b of the adjacent rotating blade 15.

In the non-limiting example here described and illustrated, the end face 30a and the end face 30b have substantially interlocking shapes. However, according to a variant not illustrated the end face 30a and the end face 30b can be plain parallel faces.

As in the non-limiting example here described and illustrated the rotating blade 15 comprises a snubber 22a and a snubber 22b which are substantially identical, in the following we will describe features referring only to a generic snubber 22. It has to be understood that the following features regarding the snubber 22 can be considered as present also in snubber 22a and/or in snubber 22b.

The snubber 22 is shaped so as to create a centripetal force towards the root 17 opposing the centrifugal force generated during the rotation of the disc to which the rotating blade 15 is coupled.

In other words, the snubber 22 is shaped so as to produce an aerodynamic force having a direction opposite to the centrifugal force in order to reduce the load on the disc and on the blade attachment (especially along the root 17). With reference to figures 2-4, the snubber 22 has an upstream edge 33 and a downstream edge 34 (considering the direction D of the hot working fluid in the expansion channel 12), an upper face 35 facing the tip 23 and extending from the upstream edge 33 to the downstream edge 34 and a lower face 36 facing the root 17 and extending from the upstream edge 33 to the downstream edge 34. Preferably, the snubber 32 is shaped so as, in use, the pressure of the hot working fluid flowing in expansion channel 12 increases during the passage on the upper face 35 and decreases during the passage along the lower face 36 in order to create a downward force on the blade 15 towards the root 17.

Preferably the upper face 35 is concave.

Preferably the lower face 36 is convex.

In the non-limiting example here described the distance D1 between the leading edge 27 of the airfoil 18 and the upstream edge 33 of the snubber 22 is smaller than the distance D2 between the downstream edge 34 of the snubber 22 and the trailing edge 28 of the airfoil 18. Distances D1 and D2 are both measured along the axial direction.

In this way the upstream edge 33 is located in a region wherein the hot gas working fluid flow has a moderate Mach number. This is beneficial for aerodynamic loss reduction. Preferably, the snubber 22 has a radial section (more visible in figure 4) which tapers towards the downstream edge 34. In this way the aerodynamic losses at the downstream edge 34 are minimized.

The camber line C indicated in figure 4 and the profile thickness distribution along the camber line C (indicated by the dotted lines transversal to the camber line in figure 4) define the aerodynamic shape of the snubber 22. Preferably the snubber inlet metal angle α is substantially aligned with the meridional inlet flow angle γ of the blade 15 (indicated in figure 3).

The snubber inlet metal angle is the angle defined between the tangent to the camber line C at the upstream 33 edge and the axial direction A.

The meridional inlet flow angle γ of the blade 15 is the radial flow angle at the specific radial position of the snubber at the airfoil leading edge 27 measured on a meridional plane cutting the turbine 5 through a diametral line and the axis A.

Preferably, the snubber inlet metal angle α at the upstream edge 33 is comprised between 0°-30°.

Preferably, the snubber exit metal angle β at the downstream edge 34 is substantially comprised between 10° and 50°.

The snubber exit metal angle β being the angle defined between the tangent to the camber line C at the downstream edge 34 and the turbine axial direction A.

Preferably the snubber exit metal angle β is greater than snubber inlet metal angle α.

Preferably, the axial length L1 of the snubber 22 has a value comprised between 10% and 60% of the axial length L2 of the airfoil 18 measured at the radial height at which is positioned the snubber 22. Preferably, the snubber 22 projects from the airfoil 18 at a radial height comprised in a region of the airfoil 18 extending from 50% to 80% of the span S of the airfoil 18. Wherein span S is defined as the radial height of the airfoil 18 measured from the point of the airfoil 18 in contact with the platform 20 to the tip 23.

According to a variant non illustrated of the present invention, the rotating blade can comprise a plurality of snubbers projecting from the suction side and/or the pressure side and shaped so as to create a centripetal force towards the root 17. Preferably said plurality of snubbers can be radially superimposed in order to create a cascade of profiles which increase the centripetal force acting on the rotating blade and therefore reduce further the load on the disc and on the blade attachment.

For example, the blade can comprise a first snubber positioned at 50% of the span along the airfoil and a further snubber positioned at 80% of the span along the airfoil.

Preferably, the further snubber is substantially identical to the snubber.

Advantageously, the blade according to the present invention is configured so as to reduce the loads on the rotor disc and on the blade attachment.

This allow to use blades having a length greater than the maximum length actually used and, consequently, obtain an increase in the power produced by the gas turbine comprising blades according to the invention.

Moreover, as the loads on the rotor disc and on the blade attachment are reduced, cheaper materials having a lower specific strength can be used.

Finally, it is clear that modifications and variants can be made to the blade and the gas turbine described herein without departing from the scope of the present invention, as defined in the appended claims.

## Claims

1. Rotating blade for a gas turbine (5) comprising:
• a root (17) configured to be coupled to a disc of the gas turbine (5) which rotates about an axis (A) of the gas turbine (5);
• a platform (20) coupled to the root (17);
• an airfoil (18) extending from the platform (20) and provided with a tip (23) radially opposite to the root (17) or the platform (20); the airfoil (18) comprising a leading edge (27), a trailing edge (28), a pressure side (25) and a suction side (26);
• at least one snubber (22; 22a, 22b) projecting from the suction side (26) and/or the pressure side (25); the snubber (22; 22a, 22b) being shaped so as to create a centripetal force towards the root (17) opposing the centrifugal force generated during the rotation of the disc to which the blade (15) is coupled; wherein the snubber (22; 22a, 22b) has an upstream edge (33) and a downstream edge (34), an upper face (35) facing the tip (23) and extending from the upstream edge (33) to the downstream edge (34) and a lower face (36) facing the root (17) and extending from the upstream edge (33) to the downstream edge (34); the snubber (22; 22a, 22b) being shaped so as, in use, the pressure of the hot working fluid flowing in the gas turbine (5) increases during the passage on the upper face (35) and decreases during the passage along the lower face (36) in order to create a downward force on the blade (15) towards the root (17);
the blade being **characterized in that** the snubber inlet metal angle (α) of the snubber (22; 22a, 22b) at the upstream edge (33) is comprised between 0°-30°.

2. Blade according to claim 1, wherein the snubber (22; 22a, 22b) projects from the suction side (26) and/or the pressure side (25) along a circumferential direction.

3. Blade according to claim 1 or 2, wherein the upper surface (35) is concave.

4. Blade according to anyone of the foregoing claims, wherein the lower surface (36) is convex.

5. Blade according to anyone of the foregoing claims, wherein the distance (D1) between the leading edge (27) of the airfoil (18) and the upstream edge (33) of the snubber (22; 22a, 22b) is smaller than the distance (D2) between the downstream edge (34) of the snubber (22; 22a, 22b) and the trailing edge (28) of the airfoil (18).

6. Blade according to anyone of the foregoing claims, wherein the snubber (22; 22a, 22b) has a radial section which tapers towards the downstream edge (34).

7. Blade according to anyone of the foregoing claims, wherein the snubber inlet metal angle (α) of the snubber (22; 22a, 22b) is aligned with a meridional flow angle (γ) of the blade (15).

8. Blade according to the to anyone of the foregoing claims, wherein the exit metal angle of the snubber (22; 22a, 22b) at the downstream edge (34) is comprised between 10° and 50°.

9. Blade according to anyone of the foregoing claims, wherein the axial length (L2) of the snubber (22; 22a, 22b) has a value comprised between 10% and 60% of the axial length (L1) of the airfoil (18) measured at the radial height at which the snubber (22; 22a, 22b) is positioned.

10. Blade according to anyone of the foregoing claims, wherein the snubber (22; 22a, 22b) projects from the airfoil (18) in a region of the airfoil (18) extending from 50% to 80% of the span (S) of the airfoil (18).

11. Blade according to anyone of the foregoing claims comprising at least one further snubber projecting from the suction side and/or the pressure side shaped so as to create a further centripetal force towards the root.

12. Blade according to anyone of the foregoing claims comprising a first snubber (22a) projecting from the suction side (26) and a second snubber (22b) projecting from the pressure side (25); the first snubber (22a) and the second snubber (22b) being provided with a respective first end face (30a) and second end face (30b); the first end face (30a) and the second end face (30b) being complementary.

13. Gas turbine comprising at least a row of rotating blades (15); at least one of the rotating blades (15) of the row being of the type claimed in anyone of the foregoing claims.

## Patentansprüche

1. Rotationsschaufel für eine Gasturbine (5), umfassend:
• einen Fuß (17), der dafür konfiguriert ist, mit einer Scheibe der Gasturbine (5) gekoppelt zu werden, die um eine Achse (A) der Gasturbine (5) rotiert;
• eine Plattform (20), die mit dem Fuß (17) gekoppelt ist;
• ein Schaufelblatt (18), das von der Plattform (20) ausgeht und mit einer dem Fuß (17) oder der Plattform (20) radial entgegengesetzten Spitze (23) versehen ist; wobei das Schaufelblatt (18) eine Vorderkante (27), eine Hinterkante (28), eine Druckseite (25) und eine Saugseite (26) aufweist;
• mindestens einen Dämpfer (22; 22a, 22b), der von der Saugseite (26) und/oder der Druckseite (25) vorspringt; wobei der Dämpfer (22; 22a, 22b) so geformt ist, dass er eine Zentripetalkraft zu dem Fuß (17) hin erzeugt, die der Zentrifugalkraft entgegengesetzt ist, die während der Rotation der Scheibe, mit welcher die Schaufel (15) gekoppelt ist, erzeugt wird; wobei der Dämpfer (22; 22a, 22b) eine stromaufwärts liegende Kante (33) und eine stromabwärts liegende Kante (34), eine zu der Spitze (23) weisende Oberseite (35), die von der stromaufwärts liegenden Kante (33) zu der stromabwärts liegenden Kante (34) verläuft, und eine dem Fuß (17) gegenüberliegende Unterseite (36) hat, die von der stromaufwärts liegenden Kante (33) zu der stromabwärts liegenden Kante (34) verläuft; wobei der Dämpfer (22; 22a, 22b) so geformt ist, dass er im Betrieb den Druck des in der Gasturbine (5) strömenden heißen Arbeitsfluids während des Durchtritts über die Oberseite (35) erhöht und während des Durchtritts entlang der Unterseite (36) verringert, um eine abwärtsgerichtete Kraft an der Schaufel (15) in Richtung des Fußes (17) zu erzeugen;
wobei die Schaufel **dadurch gekennzeichnet ist, dass** der Dämpfereinlassmetallwinkel (α) des Dämpfers (22; 22a, 22b) an der stromaufwärts liegenden Kante (33) zwischen 0°-30° beträgt.

2. Schaufel nach Anspruch 1, wobei der Dämpfer (22; 22a, 22b) von der Saugseite (26) und/oder der Druckseite (25) entlang einer Umfangsrichtung vorspringt.

3. Schaufel nach Anspruch 1 oder 2, wobei die obere Oberfläche (35) konkav ist.

4. Schaufel nach einem der vorhergehenden Ansprüche, wobei die untere Oberfläche (36) konvex ist.

5. Schaufel nach einem der vorhergehenden Ansprüche, wobei der Abstand (D1) zwischen der Vorderkante (27) des Schaufelblatts (18) und der stromaufwärts liegenden Kante (33) des Dämpfer (22; 22a, 22b) kleiner ist als der Abstand (D2) zwischen der stromabwärts liegenden Kante (34) des Dämpfers (22; 22a, 22b) und der Hinterkante (28) des Schaufelblatts (18).

6. Schaufel nach einem der vorhergehenden Ansprüche, wobei der Dämpfer (22; 22a, 22b) einen radialen Querschnitt hat, der sich zu der stromabwärts liegenden Kante (34) hin verjüngt

7. Schaufel nach einem der vorhergehenden Ansprüche, wobei der Dämpfereinlassmetallwinkel (α) des Dämpfers (22; 22a, 22b) mit dem meridionalen Strömungswinkel (γ) der Schaufel (15) ausgerichtet ist.

8. Schaufel nach einem der vorhergehenden Ansprüche, wobei der Auslassmetallwinkel des Dämpfers (22; 22a, 22b) an der stromabwärts liegenden Kante (34) zwischen 10° und 50° liegt.

9. Schaufel nach einem der vorhergehenden Ansprüche, wobei die axiale Länge (L2) des Dämpfers (22; 22a, 22b) einen Wert hat, der zwischen 10 % und 60 % der axialen Länge (L1) des Schaufelblatts (18), gemessen in der radialen Höhe, in welcher der Dämpfer (22; 22a, 22b) positioniert ist, liegt.

10. Schaufel nach einem der vorhergehenden Ansprüche, wobei der Dämpfer (22; 22a, 22b) von dem Schaufelblatt (18) in einem Gebiet des Schaufelblatts (18) vorspringt, das sich von 50 % bis 80 % der freien Länge (S) des Schaufelblatts (18) erstreckt.

11. Schaufel nach einem der vorhergehenden Ansprüche, enthaltend mindestens einen weiteren Dämpfer, der von der Saugseite und/oder das Druckseite vorspringt und so geformt ist, dass er eine weitere Zentripetalkraft zu dem Fuß hin erzeugt.

12. Schaufel nach einem der vorhergehenden Ansprüche, enthaltend einen ersten Dämpfer (22a), der von der Saugseite (26) vorspringt, und einen zweiten Dämpfer (22b), der von der Druckseite (25) vorspringt; wobei der erste Dämpfer (22a) und der zweite Dämpfer (22b) mit einer ersten Stirnseite (30a) bzw. einer zweiten Stirnseite (30b) versehen sind; wobei die erste Stirnseite (30a) und die zweite Stirnseite (30b) komplementär sind.

13. Gasturbine, enthaltend mindestens eine Reihe von Rotationsschaufeln (15); wobei mindestens eine der Rotationsschaufeln (15) der Reihe dem in einem der vorstehenden Ansprüche beanspruchten Typ entspricht.

## Revendications

1. Pale tournante pour une turbine à gaz (5) comprenant :
• une emplanture (17) configurée pour être couplée à un disque de la turbine à gaz (5) qui tourne autour d'un axe (A) de la turbine à gaz (5) ;
• une plate-forme (20) couplée à l'emplanture (17) ;
• un profil aérodynamique (18) s'étendant à partir de la plate-forme (20) et pourvu d'une pointe (23) opposée radialement à l'emplanture (17) ou la plate-forme (20) ; le profil aérodynamique (18) comprenant un bord d'attaque (27), un bord de fuite (28), un côté refoulement (25) et un côté aspiration (26) ;
• au moins un amortisseur (22 ; 22a, 22b) faisant saillie du côté aspiration (26) et/ou du côté refoulement (25) ; l'amortisseur (22 ; 22a, 22b) étant formé de sorte à créer une force centripète vers l'emplanture (17) s'opposant à la force centrifuge générée pendant la rotation du disque auquel la pale (15) est couplée ; dans laquelle l'amortisseur (22 ; 22a, 22b) a un bord en amont (33) et un bord en aval (34), une face supérieure (35) faisant face à la pointe (23) et s'étendant du bord en amont (33) vers le bord en aval (34) et une face inférieure (36) faisant face à l'emplanture (17) et s'étendant du bord en amont (33) vers le bord en aval (34) ; l'amortisseur (22 ; 22a, 22b) étant formé de sorte que, en utilisation, la pression du fluide de travail chaud s'écoulant dans la turbine à gaz (5) augmente lors du passage sur la face supérieure (35) et diminue lors du passage le long de la face inférieure (36) afin de créer une force vers le bas sur la pale (15) vers l'emplanture (17) ;
la pale étant **caractérisée en ce que** l'angle de métal d'entrée d'amortisseur (α) de l'amortisseur (22 ; 22a, 22b) au niveau du bord en amont (33) est compris entre 0° et 30°.

2. Pale selon la revendication 1, dans laquelle l'amortisseur (22 ; 22a, 22b) fait saillie du côté aspiration (26) et/ou du côté refoulement (25) le long d'une direction circonférentielle.

3. Pale selon la revendication 1 ou 2, dans laquelle la surface supérieure (35) est concave.

4. Pale selon l'une quelconque des revendications précédentes, dans laquelle la surface inférieure (36) est convexe.

5. Pale selon l'une quelconque des revendications précédentes, dans laquelle la distance (D1) entre le bord d'attaque (27) du profil aérodynamique (18) et le bord en amont (33) de l'amortisseur (22 ; 22a, 22b) est plus petite que la distance (D2) entre le bord en aval (34) de l'amortisseur (22 ; 22a, 22b) et le bord de fuite (28) du profil aérodynamique (18).

6. Pale selon l'une quelconque des revendications précédentes, dans laquelle l'amortisseur (22 ; 22a, 22b) a une section radiale qui s'amincit vers le bord en aval (34).

7. Pale selon l'une quelconque des revendications précédentes, dans laquelle l'angle de métal d'entrée d'amortisseur (α) de l'amortisseur (22 ; 22a, 22b) est aligné sur un angle d'écoulement méridional (γ) de la pale (15).

8. Pale selon l'une quelconque des revendications précédentes, dans laquelle l'angle de métal de sortie de l'amortisseur (22 ; 22a, 22b) au niveau du bord en aval (34) est compris entre 10° et 50°.

9. Pale selon l'une quelconque des revendications précédentes, dans laquelle la longueur axiale (L2) de l'amortisseur (22 ; 22a, 22b) a une valeur comprise entre 10 % et 60 % de la longueur axiale (L1) du profil aérodynamique (18) mesurée au niveau de la hauteur radiale à laquelle l'amortisseur (22 ; 22a, 22b) est positionné.

10. Pale selon l'une quelconque des revendications précédentes, dans laquelle l'amortisseur (22 ; 22a, 22b) fait saillie du profil aérodynamique (18) dans une région du profil aérodynamique (18) s'étendant de 50 % à 80 % de l'envergure (S) du profil aérodynamique (18).

11. Pale selon l'une quelconque des revendications précédentes, comprenant au moins un autre amortisseur faisant saillie du côté aspiration et/ou du côté refoulement formé de sorte à créer une autre force centripète vers l'emplanture.

12. Pale selon l'une quelconque des revendications précédentes, comprenant un premier amortisseur (22a) faisant saillie du côté aspiration (26) et un second amortisseur (22b) faisant saillie du côté refoulement (25) ; le premier amortisseur (22a) et le second amortisseur (22b) étant pourvus d'une première face d'extrémité (30a) et d'une seconde face d'extrémité (30b) respectives ; la première face d'extrémité (30a) et la seconde face d'extrémité (30b) étant complémentaires.

13. Turbine à gaz comprenant au moins une rangée de pales tournantes (15) ; au moins une des pales tournantes (15) de la rangée étant du type revendiqué dans l'une quelconque des revendications précédentes.
